# EUROPEAN PATENT APPLICATION

(11) **EP 4 742 287 A1**
(43) Date of publication of application: **13.05.2026**
(21) Application number: 24851805.2
(22) Date of filing: 05.08.2024
(51) Int. Cl.: H01G 9/02, H01G 9/15, H01G 9/145

(54) **SOLID ELECTROLYTIC CAPACITOR AND PRODUCTION METHOD**

(30) Priority: 10.08.2023 JP 2023131345
(71) Applicant: Nippon Chemi-Con Corporation, Tokyo 141-8605 (JP)
(72) Inventor: SATO, Kenta, Tokyo 141-8605 (JP); SHIN, Ryutaro, Tokyo 141-8605 (JP)
(74) Representative: AWA Sweden AB
(86) International application number: PCT/JP2024/027909
(87) International publication number: WO 2025/033381

(57) **Abstract**

A solid electrolytic capacitor with high withstand voltage while maintaining low equivalent series resistance characteristic, and the manufacturing method thereof are provided. A separator is intervened between the anode body and the cathode body. The separator holds conductive polymer particles and intervenes a layer of the conductive polymer particles between the anode body and the cathode body. The separator contains manila fiber, esparto fiber, or rayon fiber and has the air resistance of 0.35 [s/100mL] or more. This solid electrolytic capacitor is manufactured by an element formation process of forming an element having an anode body having a dielectric film, a cathode body, and a separator by making the anode body and the cathode body to face each other via the separator; and a solid electrolyte layer formation process of impregnating the capacitor element with a conductive polymer dispersion in which conductive polymer particles are dispersed.

## Description

### FIELD OF INVENTION

The present disclosure relates to a solid electrolytic capacitor and a manufacturing method thereof.

### BACKGROUND

Capacitors are used in various application. For example, in the field of power electronics, power supply circuits, which convert AC power into DC power by converter circuits and convert said DC power into desired AC power by inverter circuits, are provided with smoothing capacitors to suppress pulsation of DC output from the converter circuits, smooth the suppressed DC, and then input the DC to the inverter circuits. Furthermore, for stable operation and noise removal of semi-conductor switching elements such as gallium nitride, decoupling capacitors are provided near said semi-conductor switching elements.

Along with a recent trend for higher power consumption, there is a strong demand for capacitors with large capacity. The electrolytic capacitors can easily meet this higher capacity, because it can increase the capacity easier than film capacitors. The electrolytic capacitors include valve metal, such as tantalum or aluminum, as an anode foil and a cathode foil. A surface of the anode foil is enlarged by making the valve metal into a sintered body or a shape such as an etching foil, and the anode foil has a dielectric film by performing treatment such as anode oxidation on the enlarged surface of the anode foil. Electrolytes intervene between the anode foil and the cathode foil.

The specific surface area of the electrolytic capacitors can be enlarged by enlarging the surface of the anode foil, which can meet the demand for higher capacitance and large capacity. Among the solid electrolytic capacitors, solid electrolytic capacitors using solid electrolytes are getting attention. The solid electrolytic capacitors have a small size, large capacity, and have lower equivalent series resistance due to high conductivity of the solid electrolytes.

Manganese dioxide and 7,7,8,8-tetracyanoquinodimethane (TCNQ) complexes are known as a solid electrolyte. In recent years, conductive polymers derived from monomers having π-conjugated double bonds, such as poly(3,4-ethylenedioxythiophene) (PEDOT) with slow reaction speed and excellent adhesion to the dielectric film, are rapidly becoming popular as a solid electrolyte. In the conductive polymer, acid compounds such as polyanions are used as a dopant, and the conductive polymer has a partial structure acting as a dopant in monomer molecules, exhibiting high conductivity.

### PRIOR ART DOCUMENT

### PATENT DOCUMENT

Patent Document 1: JP2017-38010A

### SUMMARY OF INVENTION

### PROBLEMS TO BE SOLVED BY INVENTION

Meanwhile, in the field of power electronics, capacitors with high withstand voltage are expected. For example, smoothing capacitors with the withstand voltage of 250 V are used in inverters for driving motors installed in electric cars. For hybrid-type solid electrolytic capacitors used in such a field of high withstand voltage, the dielectric film with the chemical conversion voltage of 300 V or more must be formed on the anode foil.

The present disclosure has been proposed to address the above problems, and an objective is to provide a solid electrolytic capacitor with high withstand voltage while maintaining low equivalent series resistance characteristics, and the manufacturing method thereof.

### MEANS TO SOLVE THE PROBLEM

To address the above problems, a solid electrolytic capacitor of the present embodiment includes: an anode body having a dielectric film; a cathode body facing the anode body; a layer of conductive polymer particles intervening between the anode body and the cathode body; and a separator intervening between the anode body and the cathode body and holding the conductive polymer particles, in which the separator contains a manila fiber, an esparto fiber, or a rayon fiber and has an air resistance of 0.35 [s/100mL] or more.

The dielectric film of the anode body may be a chemical conversion film with a withstand voltage of 300 V or more.

The dielectric film of the anode body may have a thickness of 330 nm or more.

The separator may have the air resistance of 3.3 [s/100mL] or more.

The solid electrolytic capacitor may contain water of 1 wt% to 15 wt% relative to a total liquid content.

The solid electrolytic capacitor may further include an electrolytic solution, and the electrolytic solution may contain a withstand voltage improving agent of 15 wt% or more relative to the total amount of the electrolytic solution.

The solid electrolytic capacitor may further include the electrolytic solution with a solute concentration of 0.08 mol/kg to 0.24 mol/kg.

A particle size D50 of the conductive polymer particles may be 5 to 500 nm.

To address the above problems, a manufacturing method of a solid electrolytic capacitor of the present embodiment includes: an element formation process of forming an element having an anode body having a dielectric film, a cathode body, and a separator by making the anode body and the cathode body to face each other via the separator; and a solid electrolyte layer formation process of forming a solid electrolyte layer between the anode body and the cathode body using a conductive polymer dispersion in which conductive polymer particles are dispersed, in which the separator contains a manila fiber, an esparto fiber, or a rayon fiber and has an air resistance of 0.35 [s/100mL] or more.

### EFFECT OF INVENTION

According to the present disclosure, the solid electrolytic capacitor has low equivalent series resistance and high withstand voltage characteristic of 300 V or more.

### EMBODIMENTS

Hereinafter, a solid electrolytic capacitor according to the embodiments will be described. Note that the present disclosure is not limited to the following embodiments.

### (Solid Electrolytic Capacitor)

A solid electrolytic capacitor is a passive element that gains the capacitance by dielectric polarization of a dielectric film and stores and discharges electric charge. The solid electrolytic capacitor includes a capacitor element. The capacitor element includes an anode body, a cathode body, a solid electrolyte layer, and a separator. Dielectric film is formed on a surface of the anode body. The anode body and the cathode body are arranged to face each other via the dielectric film. The solid electrolyte layer intervenes between the dielectric film of the anode body and the cathode body and adheres to the dielectric film of the anode body, acting as a true cathode.

The solid electrolyte layer is a layer of conductive polymer particles. The conductive polymer particles extend in series between the dielectric film and the cathode body, producing a conductive path between the dielectric film and the cathode body. The solid electrolyte layer is held by the separator. That is, the separator holds the conductive polymer particles, producing a conductive path between the dielectric film and the cathode body within the separator.

The separator holding the conductive polymer particles contains manila fiber, esparto fiber, or rayon fiber, and has the air resistance of 0.35 [s/100mL] or more. The air resistance is also called a Gurley value and is a time required for 100 mL of air to pass through the separator. The air resistance is measured by the Gurley method in accordance with JIS P8117:2009. A gasket with the inner diameter of 28.6 mm is used for the measurement. However, for the separator with the air resistance of 1 [s/100mL] or less, a gasket with the inner diameter of 6 mm is used for the measurement, and the result value is converted into a value measured with the inner diameter of 28.6 mm. In detail, the conversion formula in which the value obtained with the inner diameter of 6 mm is multiplied by 6²/28.6².

When the separator contains manila fiber, esparto fiber, or rayon fiber and has the air resistance of 0.35 [s/100mL] or more, the solid electrolytic capacitor achieves both low equivalent series resistance (low ESR) and high withstand voltage of at least 250 V or more.

Here, the conductive polymer particles are permeated within the separator by impregnating the capacitor element with the conductive polymer dispersion in which the conductive polymer particles are dispersed. When the air resistance of the separator is low and the conductive polymer dispersion easily permeates to the separator, the conductive path is well produced, resulting in low ESR. However, when the air resistance of the separator is low and the conductive polymer dispersion easily permeates to the separator, the solid electrolytic capacitor will be less short-circuit resistant and will not have high withstand voltage. On the other hand, when the air resistance of the separator is high, the short circuit resistance will be improved, but good conductive path will not be formed, which deteriorates the ESR.

However, even if the air resistance is 0.35 [s/100mL] or more, when the separator contains manila fiber, esparto fiber, or rayon fiber, the conductive path formed by the conductive polymer particles is excellently produced, and the ESR of the solid electrolytic capacitor becomes low. Also, since the air resistance is 0.35 [s/100mL] or more, the solid electrolytic capacitor has excellent short-circuit resistance, low ESR, and high withstand voltage. Particularly preferably, the separator contains manila fiber, esparto fiber, or rayon fiber and has the air resistance of 3.3 [s/100mL] or more. According to this separator, the solid electrolytic capacitor will have the withstand voltage of more than 400 V, while maintaining low ESR.

Manila fiber, esparto fiber, or rayon fiber may be contained in the separator in a total of 50 wt% or more, and the plurality of them may be contained. Furthermore, the separator may contain other cellulose fibers or resin fibers, in addition to manila fiber, esparto fiber, or rayon fiber. The other cellulose fibers may be kraft or hemp, for example. The rayon fiber may preferably be fibrillated rayon fiber. The fibrillated rayon fiber is fiber in which fine fibers branch out from the surface of the original fiber. For example, the fibrillation can be performed by beating.

The method to permeate the conductive polymer particles in the separator is the impregnation of the conductive polymer dispersion. When employing the solid electrolyte layer formation method in which the conductive polymer dispersion is impregnated, generally, there is a trade-off of low ESR and high withstand voltage due to the air resistance of the separator. However, in the premise of the impregnation of the conductive polymer dispersion, when the separator contains manila fiber, esparto fiber, or rayon fiber and has the air resistance of 0.35 [s/100mL] or more, the trade-off of the low ESR and high withstand voltage disappears, and the solid electrolytic capacitor will have low ESR and high withstand voltage.

When the solid electrolyte layer formation method in which the polymerization reaction of the conductive polymer is caused while immersing the capacitor element in the polymerization solution is employed, manila fiber, esparto fiber, or rayon fiber dissolves by the strong acid polymerization solution.

The conductive polymer particles dispersed in the conductive polymer dispersion are self-doped conjugated polymers doped by dopant molecules in the molecules or externally-doped conjugated polymers doped by external dopant molecules. The conjugated polymer is obtained by chemical oxidative polymerization or electrolytic oxidative polymerization of monomers with π-conjugated double bonds or derivatives thereof. The conductive polymer exhibits high conductivity by the doping reaction to the conjugated polymer. That is, the conductivity is exhibited by adding a small amount of the dopant, such as acceptors that easily accept electrons or donors that easily donate electrons to the conjugated polymer.

The particle size D50 of the conductive polymer particles, that is, the median diameter is preferably 5 nm to 500 nm. The conductive polymer particles with the particle size D50 of 5 nm to 500 nm are dispersed in the conductive polymer dispersion, and a layer of the conductive polymer particles with the particle size D50 of 5 nm to 500 nm is formed in the solid electrolyte layer. When the particle size D50 of the conductive polymer particles is 5 nm to 500 nm, the ESR of the solid electrolytic capacitor becomes lower.

Although it is only an assumption and the mechanism is not limited thereto, the conductive polymer particles with the particle size D50 of 5 nm to 500 nm are densely attached to the anode body and the cathode body, so that the conductive path is easily formed to the end of the enlarged surface layer of the anode foil. Therefore, it is considered that, when the particle size D50 of the conductive polymer particles is 5 nm to 500 nm, the ESR of the solid electrolytic capacitor becomes lower.

Known polymers may be used for the conjugated polymer without limitation. For example, the conjugated polymer may be polypyrrole, polythiophene, and polyaniline, etc. These conjugated polymers may be used in single or in combination of two or more, and may further be copolymers of two or more types of monomers.

Among the above-described conjugated polymers, conjugated polymers formed by polymerizing thiophene or derivatives thereof is preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be compounds selected from thiophene with substituents at 3-position and 4-position, and the 3-position and 4-position substituents of the thiophene ring may form a ring together with the 3-position and 4-position carbon. It is preferable that the carbon number of alkyl groups and alkoxy groups is 1 to 16.

In particular, a polymer of 3,4-ethylenedioxythiophene which is called EDOT, that is, poly(3,4-ethylenedioxythiophene) which is called PEDOT is particularly preferable. Furthermore, an alkylated ethylenedioxythiophene in which alkyl groups are added to 3,4-ethylenedioxythiophene may be used, and for example, a methylated ethylenedioxythiophene (that is, 2-methyl-2,3-dihydro-thieno[3,4-b][1,4] dioxin), ethylated ethylenedioxythiophene (that is, 2-ethyl-2,3-dihydro-thieno[3,4-b] [1,4] dioxin), and the like may be used.

As the dopant, known dopants may be used without limitation. The dopant may be used in single or in combination of two or more. Also, the dopant may be polymers or monomers. For example, the dopant may be inorganic acid such as polyanions, boric acid, nitric acid, and phosphoric acid, and organic acid such as acetic acid, oxalic acid, citric acid, tartaric acid, squaric acid, rhodizonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid.

For example, the polyanion may be polymers consisting of only component units with anion groups or polymers consisting of component units with anion groups and component units without anion groups, and may be substituted or unsubstituted polyalkylene, substituted or unsubstituted polyalkenylene, substituted or unsubstituted polyimide, substituted or unsubstituted polyamide, and substituted or unsubstituted polyester. In particular, the polyanion may be polyvinyl sulfonic acid, polystyrene sulfonic acid, polyaryl sulfonic acid, polyacrylic sulfonic acid, polymethacrylic sulfonic acid, poly(2-acrylamide-2-methylpropane sulfonic acid), polyisoprene sulfonic acid, polyacrylic acid, polymethacrylic acid, and polymaleic acid, etc.

Dispersion media of the conductive polymer dispersion may be any dispersant media if particles or powder of the conductive polymer disperses thereto, and may be water, organic solvents, or mixtures thereof. Suitable organic solvents may be polar solvents, alcohols, esters, hydrocarbons, carbonate compounds, ether compounds, chain ethers, heterocyclic compounds, and nitrile compounds, etc.

The polar solvent may be N-methyl-2-pyrrolidone, N,N-dimethylformamide, N,N-dimethylacetamide, and dimethylsulfoxide. The alcohol may be methanol, ethanol, propanol, butanol, ethylene glycol, glycerin, and polyglycerin, etc. The ester may be ethyl acetate, propyl acetate, and butyl acetate, etc. The hydrocarbon may be hexane, heptane, benzene, toluene, and xylene, etc. The carbonate compound may be ethylene carbonate and propylene carbonate, etc. The ether compound may be dioxane, diethylether, etc. The chain ether may be ethylene glycol dialkyl ether, propylene glycol dialkyl ether, polyethylene glycol dialkyl ether, and polypropylene glycol dialkyl ether, etc. The heterocyclic compound may be 3-methyl-2-oxazolidinone, etc. The nitrile compound may be acetonitrile, glutaronitrile, methoxyacetonitrile, propionitrile, and benzonitrile, etc.

The pH of the conductive polymer dispersion may be adjusted from the viewpoint of acidity. For example, the pH adjuster may be ammonia water, sodium hydroxide, primary amines, secondary amines, and tertiary amines, etc. Furthermore, common additives such as organic binders, surfactants, dispersants, defoamers, coupling agents, antioxidants, UV absorbers, and the like may be added to the conductive polymer dispersion. The pH of the conductive polymer dispersion is preferably 2 to 9. When the pH is in the range of 2 to 9, the dissolution of the separator, the anode body, and the cathode body is suppressed.

To facilitate the impregnation of the conductive polymer dispersion to the capacitor element, depressurization process or pressurization process may be performed as necessary. The impregnation process of the conductive polymer dispersion may be repeated multiple times. After the conductive polymer dispersion is impregnated to the capacitor element, the dispersion medium or a part of the solvent is removed by a drying process.

The anode body to which the conductive polymer particles held by the separator are attached is a foil body formed of a valve metal, that is an anode foil. In the wound-type solid electrolytic capacitor, the anode body is a long strip of elongated valve metal, and in the laminated-type electrolytic capacitor, the anode body is a sintered body formed by molding and sintering a flat plate or powder into a planar shape. The valve metal is aluminum, tantalum, niobium, niobium oxide, titanium, hafnium, zirconium, zinc, tungsten, bismuth, and antimony, etc. The purity of the anode body is desirably 99.9% or more, and impurities such as silicon, iron, copper, magnesium, and zinc may be included.

An enlarged surface layer is formed on one or both surfaces of the anode body. The enlarged surface layer is a surface layer which is treated to enlarge the surface area larger than the projected area, and is an etching layer in which etching is performed on the foil body, a sintered layer in which powder of the valve metal is attached and sintered, or a vapor-deposited layer in which particles of valve metal are vapor-deposited on the foil body. That is, the enlarged surface layer has a porous structure and is formed by tunnel-shaped pits dug in the thickness direction of the foil, spongy pits or spongelike pits in which fine voids are spatially interconnected and expanded, or voids between dense powder bodies or particles.

The etching layer is formed by applying AC or DC current on the anode foil in an aqueous acidic solution in which halogen ions are present, such as hydrochloric acid. The sintered layer is formed by attaching and sintering powder of the valve metal same as or different from the foil body. The vapor-deposited body is produced such as by resistance heating vapor-deposition or electron beam heating vapor-deposition, and is formed by heating and evaporating the valve metal same as or different from the foil body using resistive heat and electron beam energy, and depositing vapor of the particles of the valve metal on the surface of the foil body.

The dielectric film is formed on the surface layer of the anode body along unevenness of the enlarged surface layer. Typically, the dielectric film is an oxide film which is an anodically oxidized surface layer of the anode body. When the anode body is aluminum foil, the dielectric film is an aluminum oxide layer obtained by oxidizing the surface layer of the anode body along the unevenness of the enlarged surface layer. The dielectric film is formed by chemical conversion treatment.

In the chemical conversion treatment, voltage is applied on the anode body in a chemical conversion solution to achieve the desired withstand voltage. The chemical conversion solution is a solution without halogen ions, and for example is phosphoric acid-based chemical conversion solution such as ammonium dihydrogen phosphate, boric acid-based chemical conversion solution such as ammonium borate, and adipic acid-based chemical conversion solution such as ammonium adipate, etc. In this solid electrolytic capacitor, the dielectric film with the withstand voltage of 300 V or more is formed, so that the rated withstand voltage of the product can be set to 250 V. That is, the anode body is immersed in the chemical conversion solution, and voltage is applied on the anode foil until the chemical conversion voltage reaches 300 V or more while conducting current. If the dielectric film with the thickness of 1.1 to 1.5 nm is required to obtain the withstand voltage of 1 V, the dielectric film with the thickness of 330 nm or more is formed.

Note that, voids produced within the dielectric film due to the voltage application of 300 V or more may be repaired by depolarization treatment. The depolarization treatment includes heat treatment, phosphating, or both. In the heat treatment, for example, the anode foil is exposed under the temperature environment of 450 °C or more in the atmosphere to open the voids isolated within the dielectric film. In the phosphating, cracks and pores communicating to the voids are enlarged. In this phosphating, the anode body is immersed in a phosphoric acid solution or an ammonium dihydrogen phosphate solution. By this, the re-chemical conversion solution more easily permeates to the voids.

It is preferable to form a pseudo boehmite layer on the dielectric film, that is, at the foil-surface side than the dielectric film. The pseudo boehmite layer contains hydrated oxides of aluminum and is AlOOH ▪xH₂O or Al₂O₃ ▪ xH₂O. The dielectric film is a layer of aluminum oxide containing γ-alumina that is a crystalline oxide. This pseudo boehmite layer has a dense interior, and acts as a resistant layer and improves the withstand voltage of the solid electrolytic capacitor.

The pseudo boehmite layer is formed by a chemical conversion pre-process that is a pre-process of the chemical conversion treatment after the surface enlargement process of the anode body. In the chemical conversion pre-process, the anode body is immersed in pure water of 80 °C or more or in boiling pure water. The immersion time is determined by balance between the withstand voltage and the capacitance in accordance with the desired thickness of the pseudo boehmite layer. In the case the pseudo boehmite layer is formed, the pseudo boehmite layer is transformed into the dielectric film from an interface between an unoxidized aluminum foil and the pseudo boehmite layer toward an outer surface of the pseudo boehmite layer.

The cathode body is a foil body formed of the elongated valve metal, that is, a cathode foil. The purity of the cathode foil is desirably 99% or more, and impurities such as silicon, iron, copper, magnesium, and zinc may be included. The foil body is a plane foil with a flat surface or an enlarged surface layer is formed on a surface of the foil body by surface enlargement. An oxide film may be formed on the enlarged surface layer naturally or intentionally. Intentionally, a thin oxide film of about 1 to 10 Vfs may be formed by chemical conversion treatment. The natural oxide film is formed when oxygen in the air reacts with the cathode foil.

Furthermore, the cathode body may include a conductive layer. The conductive layer may mainly contain inorganic substances and inorganic compounds, and the inorganic substance and the inorganic compound may be titanium, zirconium, tantalum, niobium, and nitrides or carbides thereof, aluminum carbide, carbon material, and composite material or mixture thereof. The carbon material is fibrous carbon, carbon powder, or a mixture thereof.

The solid electrolytic capacitor may be a so-called hybrid-type in which the electrolytic solution and the solid electrolyte layer are used together. The electrolytic solution is a solution formed by adding solutes to solvents. The solute is organic acid or salt thereof, inorganic acid or salt thereof, or composite compounds of organic acid and inorganic acid or salt thereof, and is ion dissociable salt which dissociates to anionic components and cationic components. The solvent may be used in single or in combination of two or more.

Preferably, the solute is contained in the electrolytic solution in a ratio of 0.08 mol/kg or more relative to the total amount of the electrolytic solution. If the solute is less than 0.08 mol/kg, the leakage current (LC) becomes higher than that of the solid electrolytic capacitor that is within said solute concentration when manila fiber, esparto fiber, or rayon fiber with the air resistance of 0.35 [s/100mL] or more is used as the separator in the hybrid-type solid electrolytic capacitor having the dielectric film with the withstand voltage of 300 V or more.

Furthermore, preferably, the solute is contained in the electrolytic solution in a ratio of 0.24 mol/kg or less relative to the total amount of the electrolytic solution. The ESR tends to decrease in the electrolytic capacitor because the conductivity improves when the solute concentration is high. However, if the solute is more than 0.24 mol/kg, the ESR increases compared to the solid electrolytic capacitor within said solute concentration when manila fiber, esparto fiber, or rayon fiber with the air resistance of 0.35 [s/100mL] or more is used as the separator in the hybrid-type solid electrolytic capacitor having the dielectric film with the withstand voltage of 300 V or more,

In contrast, if the solute is 0.08 mol/kg to 0.24 mol/kg, both low leakage current and excellently low ESR can be achieved even when the separator containing manila fiber, esparto fiber, or rayon fiber and with the air resistance of 0.35 [s/100mL] or more is used in the hybrid-type solid electrolytic capacitor having the dielectric film with the withstand voltage of 300 V or more.

The organic acid that become the anionic component as a solute may be carboxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acids, malonic acids, 1,6-decandicarboxylic acid, 1,7-octanedicarboxylic acid, azelaic acid, resolcinic acid, phloroglucinic acid, gallic acid, gentisic acid, protocatechuic acid, pyrocatechuic acid, trimellitic acid, and pyromellitic acid, phenols, and sulfonic acid, etc. The inorganic acid may be boric acid, phosphoric acid, phosphorus acid, hypophosphorous acid, carbonic acid, and silicic acid, etc. The composite compound of organic acid and inorganic acid may be borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartric acid, borodicitric acid, borodiphthalic acid, borodi(2-hydroxy) isobutyric acid, borodiresorcinic acid, borodimethylsalicylic acid, borodinaftoeic acid, borodimandelic acid, and borodi(3-hydroxy) propionic acid, etc.

Furthermore, at least one salt of the organic acid, the inorganic acid, and the composite compound of organic acid and inorganic acid may be ammonium salt, quaternary ammonium salt, quaternary amidinium salt, amine salt, sodium salt, and potassium salt, etc. Quaternary ammonium ions of the quaternary ammonium salt may be tetramethylammonium, triethylmethylammonium, and tetraethylammonium, etc. The quaternary amidinium salt may be ethyldimethylimidazolinium and tetramethylimidazolinium, etc. The amine salt may be primary amines, secondary amines, and tertiary amines. The primary amine may be methylamine, ethylamine, propylamine, and the like, the secondary amines may be dimethylamine, diethylamine, ethylmethylamine and dibutylamine, and the like, and the tertiary amines may be trimethylamine, triethylamine, tributylamine, ethyldimethylamine, ethyldiisopropylamine, and the like.

The solvent may be either protic organic polar solvents or aprotic organic polar solvents. Typically, the protic polar solvent may be monohydric alcohols, polyhydric alcohols, and oxyalcohol compounds, etc. Typically, the aprotic polar solvent may be sulfones, amides, lactones, cyclic amides, nitriles, and sulfoxides, etc.

Furthermore, other additives may be added to the electrolytic solution. The additives may be complex compounds of boric acid and polysaccharides (mannitol, sorbitol, etc.), complex compounds of boric acid and polyhydric alcohol, borate esters, nitro compounds (o-nitrobenzoic acid, m-nitrobenzoic acid, p-nitrobenzoic acid, o-nitrophenol, m-nitrophenol, p-nitrophenol, p-nitrobenzylalcohol etc.), and phosphate esters, etc. These may be used in single or in combination of two or more.

Furthermore, the electrolytic solution may contain polymer solvents as a withstand voltage improving agent. The polymer solvent may be polyols to which alkylene oxide is added, and derivatives thereof. The withstand voltage improving agent may improve the withstand voltage of the solid electrolytic capacitor. It is preferable to add the withstand voltage improving agent in an amount of 15 wt% or more relative to the total amount of the electrolytic solution, to particularly improve the withstand voltage of the solid electrolytic capacitor.

The polyol to which alkylene oxide is added and derivatives thereof may be polyethylene glycol, polyethylene glycol glyceryl ether, polyethylene glycol diglyceryl ether, polyethylene glycol triglyceryl ether, polypropylene glycol, polypropylene glycol glyceryl ether, polypropylene glycol diglyceryl Ether, polypropylene glycol triglyceryl ether, polyoxyethylene glycerin, polyoxypropylene glycerin, glycols containing ethylene oxide and propylene oxide, and glycerin containing ethylene oxide and propylene oxide. Among them, polyols to which alkylene oxide is added with the molecular weight of 600 or more is preferable to particularly improve the withstand voltage of the solid electrolytic capacitor.

The capacitor element is immersed in the electrolytic solution to impregnate the electrolytic solution in the voids of the capacitor element. To impregnate the electrolytic solution in finer voids, depressurization process or pressurization process may be performed, if necessary. The impregnation process may be repeated multiple times. For example, the interior of the capacitor element may be depressurized, and the electrolytic solution may be injected inside the capacitor element while pressurizing the electrolytic solution.

The anode body and the cathode body are laminated alternately with the solid electrolyte layer therebetween via the separator. In the laminated-type, other than a planar-type in which an exterior is omitted, for example, the capacitor element is sealed by covering the capacitor element using a laminate film or by molding, dip coating, or printing resins such as heat-resistant resins and insulation resins. Otherwise, the anode body and the cathode body are laminated alternately and wound via the solid electrolyte layer. In this wound-type, for example, the capacitor element is inserted into a cylindrical outer casing with a bottom. An opening of the outer casing is sealed by a crimping process using a sealing body.

Here, the liquid content of the solid electrolytic capacitor refers to the liquid contained in the solid electrolytic capacitor. For example, the liquid content may be water, organic solvents used as a dispersion medium of the conductive polymer dispersion, and solvents contained in the electrolytic solution. Also, the solid electrolytic capacitor may contain 1 wt% to 15 wt% of water relative to the total amount of the liquid content.

The amount of water in the liquid content of the solid electrolytic capacitor is measured by extracting water through centrifugation of the solid electrolytic capacitor. Also, the amount of water may be measured by taking out the capacitor element from the solid electrolytic capacitor and performing water vaporization method. In the water vaporization method, for example, the capacitor element is set in a water measurement apparatus while applying N₂ gas with the pressure value of 0.1 kg/cm² and the amount of water is measured after the temperature is raised above the boiling point of water. The amount of water is measured while the solid electrolyte is attached to the capacitor element. If the liquid content such as the electrolytic solution cannot be extracted from the solid electrolytic capacitor, the water vaporization method may be used.

That is, the amount of water is the total of water added to the electrolytic solution and water contaminated in the solid electrolytic capacitor while manufacturing the solid electrolytic capacitor. Therefore, the amount of water relative to the total amount of the liquid content of the solid electrolytic capacitor may be adjusted to 1 wt% to 15 wt% by controlling water added to the electrolytic solution and water contaminated while manufacturing the solid electrolytic capacitor.

If the amount of water in the electrolytic solution is less than 1 wt%, the leakage current (LC) in the hybrid-type solid electrolytic capacitor having the dielectric film with the withstand voltage of 300 V or more drastically increases. If the amount of water in the electrolytic solution is more than 15 wt%, the leakage current (LC) in the hybrid-type solid electrolytic capacitor having the dielectric film with the withstand voltage of 300 V or more actually increases. Since ESR does not change greatly due to the relationship between the amount of water and the ESR, both low leakage current and low ESR can be achieved if the water content in the electrolytic solution is 1 wt% to 15 wt%.

Hereinafter, the solid electrolytic capacitors of the examples will be described in more detail. Note that the present disclosure is not limited to the following examples.

### (Examples 1 to 7)

The solid electrolytic capacitors of Examples 1 to 7 and Comparative Examples 1 to 5 were produced. Firstly, in Example 1 to 7 and Comparative Examples 1 to 5, the anode foil and the cathode foil were produced using an aluminum foil. The enlarged surface layer formed by the tunnel-shaped etching pits was formed on the anode foil by etching treatment. Next, the dielectric film was formed on the anode foil by chemical conversion treatment. In the chemical conversion treatment, the anode foil was immersed in an ammonium borate aqueous solution with the liquid temperature of 85 °C, and voltage was applied until the voltage reached 650 V while applying the constant current of 2 mA.

The cathode foil was an aluminum foil to which the surface enlargement and the chemical conversion treatment were not performed. The anode foil and the cathode foil were laminated via the separator. The repair chemical conversion was performed to the laminate of the anode foil, the cathode foil, and the separator. In the repair chemical conversion, the laminate was immersed in an ammonium borate aqueous solution with the liquid temperature of 85 °C, and voltage was applied until the voltage reached 550 V and the voltage was maintained for 10 minutes while applying the constant current of 2 mA. Then, the laminate was dried under the temperature environment of 105 °C.

The laminate was impregnated with the conductive polymer dispersion to attach the conductive polymer particles within the dielectric film of the anode foil, the cathode foil, and the separator. Particles of poly (3, 4-ethylenedioxythiophene) doped with polystyrene sulfonic acid were dispersed as the conductive polymer particles in the conductive polymer dispersion. The particle size D50 of the conductive polymer particles in the conductive polymer dispersion was 500 nm. The dispersion medium was a mixture solution of 50 wt% water and 50 wt% ethylene glycol, and the conductive polymer dispersion was prepared so that the concentration of the conductive polymer was 1 wt%. The conductive polymer dispersion was depressurized under the depressurized environment of 10 kPa for 10 minutes. After the conductive polymer dispersion was impregnated, the laminate was dried under the temperature environment of 105 °C for 30 minutes.

Note that the particle size D50 of the conductive polymer particles was measured using a particle size distribution measurement apparatus (Nanotrack UPA-UT151 from NIKKISO CO., LTD.). The measurement sample was diluted 100-fold by water, and stirring was performed by ultrasonic vibration before the measurement. The particle size D50 of the conductive polymer particles was determined using the volume distribution frequency value.

Furthermore, the laminate in which the layer of the conductive polymer particles had been formed was impregnated with the electrolytic solution. The solvent of the electrolytic solution was ethylene glycol. The solute of the electrolytic solution was ammonium azelate. Ammonium azelate was added to the electrolytic solution so that 16 mmol of ammonium azelate was contained per 1 kg of the electrolytic solution. Polyethylene glycol was added to the electrolytic solution as a withstand voltage improving agent. Polyethylene glycol was added to the electrolytic solution so that 20 wt% of polyethylene glycol was contained relative to the total amount of the electrolytic solution.

Furthermore, the water content contained in the solid electrolytic capacitor was adjusted to be 5 wt% relative to the total liquid content. The water content contained in the solid electrolytic capacitor was the total of water in electrolytic solution and water contaminated in the solid electrolytic capacitor while manufacturing the solid electrolytic capacitor. This water content was measured by extracting water from the produced solid electrolytic capacitor by centrifugation.

The laminate in which the layer of the conductive polymer particles had been formed and impregnated with the electrolytic solution was sandwiched by two protection film, the protection film was sandwiched by two sealing film, and the sealing film was laminated and sealed. At this time, a part of the anode foil and cathode foil was protruded outside an outer casing as a lead terminal.

Such solid electrolytic capacitors of Examples 1 to 7 and Comparative Examples 1 to 5 included different separators. The separator of Example 1 was a mixed paper of manila fiber and esparto fiber and had the air resistance of 0.35 (s/100mL). The separator of Example 2 was a mixed paper of rayon fiber and hemp fiber and had the air resistance of 0.77 (s/100mL). The separator of Example 2 contained rayon fiber of 60 wt% and hemp fiber of 40 wt%. The separator of Example 3 was a paper of rayon fiber and had the air resistance of 3.35 (s/100mL). The separator of Example 4 was a paper of rayon fiber and had the air resistance of 3.92 (s/100mL). The separator of Example 5 was a paper of rayon fiber and had the air resistance of 9.04 (s/100mL). The separator of Example 6 was a paper of rayon fiber and had the air resistance of 12.3 (s/100mL). The separator of Example 7 was formed by overlaying three papers of rayon fiber and had the air resistance of 37.5 (s/100mL). Note that fibrillated rayon fiber was used for rayon fiber of each Example.

Accordingly, the solid electrolytic capacitors of Examples 1 to 7 included the separator containing manila fiber, esparto fiber, or rayon fiber and with the air resistance of 0.35 (s/100mL) or more. Some of the separator had the air resistance of 3.3 (s/100mL) or more.

In contrast, the separator of Comparative Example 1 was a kraft paper and had the air resistance of 0.29 (s/100mL). The separator of Comparative Example 2 was a mixed paper of manila fiber and esparto fiber and had the air resistance of 0.12 (s/100mL). The separator of Comparative Example 3 was a hemp paper and had the air resistance of 0.79 (s/100mL). The separator of Comparative Example 4 was a kraft paper and had the air resistance that was too high to measure. The separator of Comparative Example 5 was a hemp paper and had the air resistance that was too high to measure.

Accordingly, the separators of Comparative Examples 1 to 5 did not contain any types of manila fiber, esparto fiber, and rayon fiber, or had the air resistance that is less than 0.35 (s/100mL) or the air resistance that was extremely high to measure even when the separator contained any types of the fibers.

### (Characteristic Test)

The ESR and the withstand voltage of the solid electrolytic capacitors of Examples 1 to 7 and Comparative Examples 1 to 5 were measured. In the measurement condition of the ESR, the ambient temperature was 20 °C, an LCR meter (E4980A from Agilent Technologies) was used, the DC bias was 1.5 V, the alternating current level was the sine wave of 1.0 Vrms, and the measurement frequency was 100 kHz. In the measurement of the withstand voltage, voltage was raised from 0 V by 1 V per a second at 25 °C, and the increase curve of current-time was examined to define voltage (V) where scintillation was observed in the increase curve of the current.

The measurement result of the ESR and the withstand voltage of the solid electrolytic capacitors of Examples 1 to 7 and Comparative Examples 1 to 5 are shown in Table 1 below.

**[Table 1]**

| | **Main Material** | **Air Resistance [s/100mL]** | **ESR [Ω]** | **Withstand Voltage [V]** |
|---|---|---|---|---|
| **Comparative Example 1** | **Kraft** | **0.29** | **0.73** | **325** |
| **Comparative Example 2** | **Manila and Esparto** | **0.12** | **0.30** | **302** |
| **Example 1** | **Manila and Esparto** | **0.35** | **0.31** | **372** |
| **Example 2** | **Rayon and Hemp** | **0.77** | **0.43** | **418** |
| **Comparative Example 3** | **Hemp** | **0.79** | **1.36** | **341** |
| **Example 3** | **Rayon** | **3.35** | **0.44** | **432** |
| **Example 4** | **Rayon** | **3.92** | **0.45** | **435** |
| **Example 5** | **Rayon** | **9.04** | **0.47** | **438** |
| **Example 6** | **Rayon** | **12.3** | **0.48** | **443** |
| **Example 7** | **Overlayed Three Rayon** | **37.5** | **0.50** | **465** |
| **Comparative Example 4** | **Kraft** | **Unmeasurable** | **11.11** | **465** |

Here, the separators of Examples 1 to 7 contained manila fiber, esparto fiber, or rayon fiber and had the air resistance of 0.35 (s/100mL) or more. Furthermore, the separators of Examples 3 to 7 had the air resistance that is higher as 3.3 (s/100mL). In contrast, in Comparative Examples 1, the separator did not contain any of manila fiber, esparto fiber, and rayon fiber and had the air resistance did not reach 0.35 (s/100mL). In Comparative Examples 3 to 5, the separator did not contain any of manila fiber, esparto fiber, and rayon fiber, but the air resistance of the separator was 0.35 (s/100mL) or more. In Comparative Example 2, the separator contained manila fiber, but the air resistance of the separator did not reach 0.35 (s/100mL).

Therefore, as shown in Table 1, the solid electrolytic capacitors of Examples 1 to 7 had the withstand voltage that is significantly higher than 300 V required in the field of power electronics and is fully capable of usage in the rated voltage of 250 V. In particular, the withstand voltage of the solid electrolytic capacitors of Examples 3 to 7 was significantly higher than 400 V. Also, the ESR of the solid electrolytic capacitors of Examples 1 to 7 was an excellent value that was 0.5 Ω or less under the high-frequency condition of 100 kHz. In contrast, the withstand voltage of the solid electrolytic capacitors of Comparative Examples 1 to 3 was more than 300 V, however, it was difficult to maintain 300 V without the withstand voltage improving agent. The ESR of the solid electrolytic capacitors of Comparative Examples 4 and 5 was much higher than Examples 1 to 7.

Accordingly, the separator contained manila fiber, esparto fiber, or rayon fiber and had the air resistance of 0.35 [s/100mL] or more, so that the conductive polymer particles were appropriately filled within the separator, and the solid electrolytic capacitor maintained low equivalent series resistance characteristic and had high withstand voltage. Furthermore, since the air resistance was 3.3 (s/100mL) or more, the solid electrolytic capacitor maintained low equivalent series resistance characteristic and had high withstand voltage.

### (Examples 8 to 12)

The solid electrolytic capacitors of Examples 8 to 12 were produced. The solid electrolytic capacitors of Examples 8 to 12 had the same configuration as Example 3 including the type of the separator and the air resistance, except for the water content contained inside the solid electrolytic capacitor. In Example 3, the solid electrolytic capacitor contained water of 5 wt% relative to a total liquid content. The water content was measured by extracting water from the produced solid electrolytic capacitor by centrifugation.

In Example 8, water was added to the electrolytic solution so that the water content contained inside the solid electrolytic capacitor became 0.2 wt% relative to the total liquid content of the solid electrolytic capacitor. In Example 9, water was added to the electrolytic solution so that the water content contained inside the solid electrolytic capacitor became 1 wt% relative to the total liquid content of the solid electrolytic capacitor. In Example 10, water was added to the electrolytic solution so that the water content contained inside the solid electrolytic capacitor became 3 wt% relative to the total liquid content of the solid electrolytic capacitor. In Example 11, water was added to the electrolytic solution so that the water content contained inside the solid electrolytic capacitor became 10 wt% relative to the total liquid content of the solid electrolytic capacitor. In Example 12, water was added to the electrolytic solution so that the water content contained inside the solid electrolytic capacitor became 15 wt% relative to the total liquid content of the solid electrolytic capacitor.

### (Characteristic Test)

The ESR, the withstand voltage, and the leakage current (LC) of the solid electrolytic capacitors of Examples 8 to 12 were measured. The ESR and the withstand voltage were measured by the same method and under the same conditions as Examples 3. The leakage current was a value measured using an oscilloscope 20 minutes after voltage of 475 V had been applied under the temperature environment of 105 °C.

The measurement results of the ESR and the withstand voltage of the solid electrolytic capacitors of Examples 3 and 8 to 12 are shown in Table 2 below.

**[Table 2]**

| | **Water Content [wt%]** | **ESR [Ω]** | **Withstand Voltage [V]** | **LC [mA]** |
|---|---|---|---|---|
| **Example 8** | **0.2** | **0.48** | **419** | **0.324** |
| **Example 9** | **1** | **0.45** | **428** | **0.149** |
| **Example 10** | **3** | **0.44** | **432** | **0.137** |
| **Example 3** | **5** | **0.44** | **432** | **0.125** |
| **Example 11** | **10** | **0.38** | **432** | **0.127** |
| **Example 12** | **15** | **0.39** | **425** | **0.176** |

As shown in the above Table 2, when the separator contained manila fiber, esparto fiber, or rayon fiber and had the air resistance of 0.35 (s/100mL) or more, the ESR and the withstand voltage were excellent regardless of the water content. The leakage current was excellent when the water content was 1 wt% to 15 wt%.

### (Examples 13 to 17)

The solid electrolytic capacitors of Examples 13 to 17 were produced. The solid electrolytic capacitors of Examples 13 to 17 had the same configuration as Example 3 including the type of the separator and the air resistance, except for the addition amount of polyethylene glycol added to the electrolytic solution as a withstand voltage improving agent.

In Example 3, the addition amount of polyethylene glycol to the electrolytic solution was 20 wt%, whereas in Example 13, the addition amount of polyethylene glycol to the electrolytic solution was zero. In Example 14, the addition amount of polyethylene glycol to the electrolytic solution was 10 wt%. In Example 15, the addition amount of polyethylene glycol to the electrolytic solution was 15 wt%. In Example 16, the addition amount of polyethylene glycol to the electrolytic solution was 30 wt%. In Example 17, the addition amount of polyethylene glycol to the electrolytic solution was 40 wt%.

### (Characteristic Test)

The withstand voltage of the solid electrolytic capacitors of Examples 13 to 17 was measured. The withstand voltage was measured by the same method and under the same conditions as Examples 3. The measurement results of the withstand voltage of the solid electrolytic capacitors of Examples 3 and 13 to 17 are shown in Table 3 below.

**[Table 3]**

| | **Example 13** | **Example 14** | **Example 15** | **Example 3** | **Example 16** | **Example 17** |
|---|---|---|---|---|---|---|
| **Polyethylene Glycol [wt%]** | **0** | **10** | **15** | **20** | **30** | **40** |
| **Withstand Voltage [V]** | **381** | **383** | **405** | **432** | **440** | **445** |

As shown in the above Table 3, there was no large change in the withstand voltage of Examples 13 and 14. However, the withstand voltage of Example 15 with the withstand voltage improving agent of 15 wt% was improved more than to Example 14. Therefore, it was observed that the withstand voltage of the solid electrolytic capacitor is improved when adding the withstand voltage improving agent of 15 wt% or more relative to the total amount of the electrolytic solution.

### (Examples 18 to 22)

The solid electrolytic capacitors of Examples 18 to 22 were produced. The solid electrolytic capacitors of Examples 18 to 22 had the same configuration as Example 3 including the type of the separator and the air resistance, except for the difference of the solute concentration in the electrolytic solution.

In Example 3, ammonium azelate was added as a solute to the electrolytic solution at a ratio of 0.16 mol per 1 kg of the electrolytic solution. In contrast, in Example 18, ammonium azelate was added to the electrolytic solution at a ratio of 0.04 mol per 1 kg of the electrolytic solution. In Example 19, ammonium azelate was added to the electrolytic solution at a ratio of 0.08 mol per 1 kg of the electrolytic solution. In Example 20, ammonium azelate was added to the electrolytic solution at a ratio of 0.24 mol per 1 kg of the electrolytic solution. In Example 21, ammonium azelate was added to the electrolytic solution at a ratio of 0.28 mol per 1 kg of the electrolytic solution. In Example 22, ammonium azelate was added to the electrolytic solution at a ratio of 0.34 mol per 1 kg of the electrolytic solution.

### (Characteristic Test)

The ESR and the withstand voltage of the solid electrolytic capacitors of Examples 18 to 22 were measured. The ESR and the withstand voltage were measured by the same method and under the same conditions as Examples 3. The measurement results of the withstand voltage of the solid electrolytic capacitors of Examples 3 and 18 to 22 are shown in Table 4 below.

**[Table 4]**

| | **Example 18** | **Example 19** | **Example 3** | **Example 20** | **Example 21** | **Example 22** |
|---|---|---|---|---|---|---|
| **Solute Concentration [mol/kg]** | **0.04** | **0.08** | **0.16** | **0.24** | **0.28** | **0.34** |
| **ESR [Ω]** | **0.47** | **0.45** | **0.44** | **0.58** | **1.05** | **1.75** |
| **Withstand Voltage [V]** | **434** | **433** | **432** | **432** | **431** | **430** |

Therefore, as shown in the above Table 4, the solid electrolytic capacitors of Examples 3, and 18 to 22 had the withstand voltage that is significantly higher than 300 V required in the field of power electronics and is fully capable of usage in the rated voltage of 250 V. However, when comparing the group of Examples 18 to 20 and the group of Examples 21 and 22, it was observed that the equivalent series resistance of the solid electrolytic capacitor was better than the equivalent series resistance characteristic of the general solid electrolytic capacitors when the solute concentration was 0.24 mol/kg or less.

### (Examples 23 and 24)

The solid electrolytic capacitors of Examples 23 and 24 and Comparative Example 6 were produced. The solid electrolytic capacitors of Examples 23 and 24 and Comparative Example 6 did not use the electrolytic solution and only included the layer of the conductive polymer particles as an electrolyte. For the other points, Example 23 was manufactured with the same method and same condition as Example 1, Example 24 was manufactured with the same method and same condition as Example 3, and Comparative Example 6 was manufactured with the same method and same condition as Comparative Example 1.

### (Characteristic Test)

The ESR and the withstand voltage of the solid electrolytic capacitors of Examples 23 and 24 and Comparative Example 6 were measured. The ESR and the withstand voltage were measured by the same method and under the same conditions as Examples 1 and 3 and Comparative Example 1.

The measurement results of the ESR and the withstand voltage of the solid electrolytic capacitors of Examples 23 and 24 and Comparative Example 6 are shown in Table 5 below.

**[Table 5]**

| | **Main Material** | **Air Resistance [s/100mL]** | **ESR [Ω]** | **Withstand Voltage [V]** |
|---|---|---|---|---|
| **Comparative Example 6** | **Kraft** | **0.29** | **0.92** | **252** |
| **Example 23** | **Manila and Esparto** | **0.35** | **0.42** | **330** |
| **Example 24** | **Rayon** | **3.35** | **0.58** | **358** |

Therefore, as shown in the above Table 5, even the solid electrolytic capacitors of Examples 23 and 24 had the ESR that was suppressed lower than Comparative Example 6 and had the withstand voltage that is significantly higher than 300 V required in the field of power electronics and is fully capable of usage in the rated voltage of 250 V.

That is, when the separator contained manila fiber, esparto fiber, or rayon fiber and had the air resistance of 0.35 (s/100mL) or more, the solid electrolytic capacitor that did not include the electrolytic solution and included the layer of the conductive polymer particles as an electrolyte also had low equivalent series resistance and high withstand voltage characteristic of 300 V or more.

Note that, when comparing Comparative Examples 1 and 6, Examples 1 and 23, and Examples 3 and 24 respectively, the withstand voltage decreased by the range of 40 V to about 70 V when the electrolytic solution was not included. Even then, it was observed that the withstand voltage of the solid electrolytic capacitors of each example, including Example 23 corresponding to Example 1, exceeded 300 V.

### (Examples 25 to 27)

The solid electrolytic capacitors of Examples 25 to 27 were produced. The solid electrolytic capacitors of Examples 25 to 27 had the same configuration as Example 3 including the type of the separator and the air resistance, except for the particle size D50 of the conductive polymer particles contained in the solid electrolyte layer. In Example 3, the solid electrolytic capacitor was produced by dispersing the conductive polymer particles with the particle size D50 of 500 nm in the conductive polymer dispersion so that the conductive polymer particles with the particle size D50 of 500 nm were contained in the solid electrolyte layer.

In Example 25, the solid electrolytic capacitor was produced by dispersing the conductive polymer particles with the particle size D50 of 50 nm in the conductive polymer dispersion so that the conductive polymer particles with the particle size D50 of 50 nm were contained in the solid electrolyte layer. In Example 26, the solid electrolytic capacitor was produced by dispersing the conductive polymer particles with the particle size D50 of 11 nm in the conductive polymer dispersion so that the conductive polymer particles with the particle size D50 of 11 nm were contained in the solid electrolyte layer. In Example 27, the solid electrolytic capacitor was produced by dispersing the conductive polymer particles with the particle size D50 of 5 nm in the conductive polymer dispersion so that the conductive polymer particles with the particle size D50 of 5 nm were contained in the solid electrolyte layer.

### (Characteristic Test)

The ESR and the withstand voltage of the solid electrolytic capacitors of Examples 25 to 27 were measured. The ESR and the withstand voltage were measured by the same method and under the same conditions as Examples 3. The measurement results of the ESR and the withstand voltage of the solid electrolytic capacitors of Examples 3 and 25 to 27 are shown in Table 6 below.

**[Table 6]**

| | **Particle Size [nm]** | **ESR [Ω]** | **Withstand Voltage [V]** |
|---|---|---|---|
| **Example 3** | **500** | **0.44** | **432** |
| **Example 25** | **50** | **0.38** | **430** |
| **Example 26** | **11** | **0.31** | **428** |
| **Example 27** | **5** | **0.30** | **427** |

As shown in the above Table 6, the solid electrolytic capacitors of Examples 3 and 25 to 27 had low equivalent series resistance and had the withstand voltage that was significantly higher than 300 V required in the field of power electronics. Also, with the particle size D50 in the range of 5 nm to 500 nm, the equivalent series resistance of the solid electrolytic capacitor was further improved. In particular, the equivalent series resistance of the solid electrolytic capacitor of Examples 25 to 27 with the particle size D50 of 50 nm or less was lower than Example 3 with the particle size D50 of 500 nm.

## Claims

1. A solid electrolytic capacitor comprising:
an anode body having a dielectric film;
a cathode body facing the anode body;
a layer of conductive polymer particles intervening between the anode body and the cathode body; and
a separator intervening between the anode body and the cathode body and holding the conductive polymer particles,
wherein the separator contains a manila fiber, an esparto fiber, or a rayon fiber and has an air resistance of 0.35 [s/100mL] or more.

2. The solid electrolytic capacitor according to claim 1, wherein the dielectric film of the anode body is a chemical conversion film with a withstand voltage of 300 V or more.

3. The solid electrolytic capacitor according to claim 1, wherein the dielectric film of the anode body has a thickness of 330 nm or more.

4. The solid electrolytic capacitor according to claim 1, wherein the separator has the air resistance of 3.3 [s/100mL] or more.

5. The solid electrolytic capacitor according to any one of claims 1 to 4, containing water of 1 wt% to 15 wt% relative to a total liquid content.

6. The solid electrolytic capacitor according to any one of claims 1 to 4, further comprising an electrolytic solution,
wherein the electrolytic solution contains a withstand voltage improving agent of 15 wt% or more relative to the total amount of the electrolytic solution.

7. The solid electrolytic capacitor according to any one of claims 1 to 4, wherein a particle size D50 of the conductive polymer particles is 5 to 500 nm.

8. A manufacturing method of a solid electrolytic capacitor, comprising:
an element formation process of forming an element having an anode body having a dielectric film, a cathode body, and a separator by making the anode body and the cathode body to face each other via the separator; and
a solid electrolyte layer formation process of forming a solid electrolyte layer between the anode body and the cathode body using a conductive polymer dispersion in which conductive polymer particles are dispersed,
wherein the separator contains a manila fiber, an esparto fiber, or a rayon fiber and has an air resistance of 0.35 [s/100mL] or more.
